# EUROPÄISCHE PATENTSCHRIFT

(11) **EP 2 265 497 B1**
(45) Veröffentlichungstag und Bekanntmachung des Hinweises auf die Patenterteilung: **04.01.2012**
(21) Anmeldenummer: 09729182.7
(22) Anmeldetag: 19.02.2009
(51) Int. Cl.: B64D 11/00

(54) **ENTKOPPLUNGSTECHNIK DES STAIRHOUSES ZUM OVERHEAD COMPARTMENT**
DECOUPLING TECHNOLOGY OF THE STAIR HOUSE TO THE OVERHEAD COMPARTMENT
TECHNIQUE DE DÉCOUPLAGE DE LA CAGE D'ESCALIER VERS LE COMPARTIMENT DE DÉGAGEMENT SUPÉRIEUR

(30) Priorität: 31.03.2008 DE 102008016418; 31.03.2008 US 72514
(43) Veröffentlichungstag der Anmeldung: 29.12.2010
(73) Patentinhaber: Airbus Operations GmbH, 21129 Hamburg (DE)
(72) Erfinder: ULBRICH-GASPAREVIC, Jovan, 25421 Pinneberg (DE); SÜTTHOFF, Thomas, 20255 Hamburg (DE)
(74) Vertreter: Maiwald Patentanwalts GmbH
(86) Internationale Anmeldenummer: PCT/EP2009/051987
(87) Internationale Veröffentlichungsnummer: WO 2009/121661

(56) Entgegenhaltungen:
- EP-A- 1 279 593
- EP-B- 0 279 620
- US-A1- 2006 049 310
- US-B1- 6 318 672

## Beschreibung

Die vorliegende Erfindung betrifft ein Flugzeug mit einem Rumpf, wobei mit einem Abstand oberhalb eines Sitzbereichs der Passagiere eine als Raumelement bezeichnete Ruhe- und Schlafzone (Overhead Compartment) für das Service- oder Bedienungspersonal vorgesehen ist, die mittels eines als Treppenbaugruppe (Stairhouse) bezeichneten Raumelementes von einer Fußbodenstruktur erreichbar ist.

Gesetzliche Vorschriften erfordern in Flugzeugen, die für Interkontinentalflüge eingesetzt werden, die Einrichtung von Individualräumen bzw. Ruhebereichen für die Piloten sowie für die Flugbegleiter, die auch als Crew-Rest, Crew Rest Compartment, Crew Rest Areas bezeichnet werden.

Die US 4 066 227 A zeigt eine so genannte Stapeldeck-Konstruktion auf dem Hauptdeckboden des Passagierraums, die als Ruhebereiche für die Flugbesatzung bzw. Flugbegleiter nutzbar sind. Das eine nachteilig starre Verbindung zwischen der Fußbodenstruktur und dem Rumpf des Flugzeugs einschließende Konzept verringert nachteilig die Passagierkapazität. Aus der EP 1 279 593 B1 ist ein Flugzeug bekannt, in dem im Überkopfraumbereich des Passagierdecks ein als Modul gestaltetes Raumelement für das Begleitpersonal vorgesehen ist. Diese Zone ist über eine Leiter erreichbar, die zwischen einer betriebsfähigen und einer verstauten Stellung positioniert werden kann. Diese Lösung erfordert eine aufwendige Handhabung der Treppe und beinhaltet einen erschwerten Zugang zu dem Ruheraum.

Um einen ausreichenden Komfort bietenden Ruhebereich für das Bordpersonal zu ermöglichen sowie zur Vermeidung einer Krafteinleitung in die Struktur der Raumelemente (Overhead Compartment, Stairhouse) ist es eine Zielsetzung der Erfindung, nach anderen Lösungen zu suchen.

US 2006/0493 10 A1 beschreibt ein Flugzeug mit Schlafmodulen, die an Strukturbauteilen des Flugzeugs im Deckenbereich angehängt sind. Diese Module sind über ein Treppenhaus von der Kabine aus zugänglich.

Es ist eine Aufgabe der vorliegenden Erfindung, eine Treppenbaugruppe (Stairhouse) so anzuordnen, damit diese keine nachteilige Geräuschentwicklung auslöst und keiner Übertragung von Kräften innerhalb des Flugzeugs ausgesetzt ist.

Gemäß einem Ausführungsbeispiel der vorliegenden Erfindung, wie in Anspruch 1 angegeben, weist das als Raumelement bezeichnete Stairhouse elastische Arretierelemente auf, über die sich eine akustische Entkoppelung zu dem weiteren Raumelement (Overhead Compartment) einstellt. Diese Entkopplungstechnik zwischen den Raumelementen verhindert weitestgehend eine Körperschallübertragung und reduziert die Geräuschentwicklung. Die akustische Entkoppelung erfolgt dabei unter Berücksichtigung auf eine mögliche Fixierung der Monumente zueinander. Gemäß einem weiteren Merkmal der Erfindung ist einerseits die Treppenbaugruppe (Stairhouse) über Fügestellen an der Fußbodenstruktur und anderseits die Ruhe- und Schlafzone (Overhead Compartment) über Fügestellen an der Rahmen- oder Rumpfstruktur des Flugzeugs fixiert. Damit wird eine optimale Kräfteeinleitung und Kräfteaufteilung in die Flugzeugstruktur realisiert, bei der das hängende Raumelement (Overhead Compartment) dem Rumpf und das weitere weitestgehend stehend positionierte Raumelement (Stairhouse) der Fußbodenstruktur zugeordnet ist. Damit stellt sich eine Strukturauslegung ein, bei der die Fußbodenstruktur immer die Kräfte eines Monuments, beispielsweise der Bordküche aufnehmen kann, selbst dann wenn kein Modul platziert ist. Die obere Rahmenstruktur des Flugzeugs kann damit unter Berücksichtigung der Einleitung von Kräften des Raumelementes (Overhead Compartment), beispielsweise unter Berücksichtigung von Bunk-Modulen (Schlafkojen) ausgelegt werden. Diese Maßnahmen bewirken eine vorteilhafte harmonische Kräfteaufteilung in die Struktur aller Raumelemente (Crew Rest, Crew Rest Compartment, Stairhouse), unter Vermeidung einer nachteiligen Durchleitung von Kräften von der oberen Rahmenstruktur in die Fußbodenstruktur über die Raumelemente. Die erfindungsgemäße Fixierung der Raumelemente sowie deren akustische Entkoppelung verringert das Geräuschniveau im Passagierbereich des Flugzeugs auf ein Niveau von 65 bis 70 dB, wodurch geforderte Grenzwerte eingehalten bzw. unterschritten werden.

Gemäß einem weiteren vorteilhaften Ausführungsbeispiel der vorliegenden Erfindung, wie in Anspruch 2 angegeben, ermöglicht das erfindungsgemäß eingesetzte Arretierelement Relativbewegungen in Z-Richtung und unterbindet weitestgehend Relativbewegungen in X- und Y-Richtung. Diese Eigenschaft des Arretierelementes unterstützt die Forderung, wonach sich keine Kräftedurchleitung von der Rahmenstruktur in die Fußbodenstruktur des Flugzeugs durch die Raumelemente (Overhead Compartment, Stairhouse) einstellen soll.

Gemäß einem weiteren vorteilhaften Ausführungsbeispiel der vorliegenden Erfindung, wie in Anspruch 3 angegeben, sieht vor, für das Arretierelement als Isolator einen Schwingungen absorbierenden Volumenkörper oder ein Federelement einzusetzen, welches jeweils mittelbar oder unmittelbar mit einem Raumelement in Wirkverbindung steht. Als Werkstoff für den Isolator eignet sich insbesondere ein aus Kautschuk hergestelltes Naturgummielement, ein bevorzugt aus Neoprene hergestelltes Kunststoffelement, ein Federelement oder ein aus einem anderen funktional äquivalenten Material hergestelltes Element, das mit den Raumelementen verbunden ist. Diese Werkstoffe eignen sich, um einerseits eine ausreichende akustische Entkopplung des Raumelementes (Stairhouse) zu erreichen und ermöglichen andererseits Relativbewegungen in Z-Richtung. Eine entsprechende konstruktive Auslegung und/oder Anordnung vorausgesetzt eignen sich derartige Isolatoren zur Kompensation auftretender Scherkräfte in X- oder Y-Richtung.

Gemäß einem weiteren vorteilhaften Ausführungsbeispiel der vorliegenden Erfindung, wie in Anspruch 4 angegeben, wird das Arretierelement durch einen Hartgewebeklotz gebildet. Der einem Raumelement zugeordnete Hartgewebeklotz umfasst einen bevorzugt aus Metall hergestellten senkrecht eingesetzten Führungsstift, welcher im Einbauzustand in eine Aufnahme des zugehörigen weiteren Raumelementes eingreift und mit einer Feder zusammenwirkt. Alternativ dazu kann ein Metallrohr vorgesehen werden, bei dem eine erste Feder in dem Rohr eingesetzt ist und eine zweite Feder das Rohr außenseitig umschließt. Gegenüber dem Rohr überstehende Abschnitte der Federn sind unmittelbar oder mittelbar an dem weiteren Raumelement abgestützt. Der Führungsstift bzw. das Metallrohr wird bevorzugt von einer Buchse umschlossen, die gleichzeitig zumindest die äußere Feder führt.

Gemäß einem weiteren vorteilhaften Ausführungsbeispiel der vorliegenden Erfindung, wie in Anspruch 5 angegeben, schließt das Arretierelement einen scheibenartig als Gummi- oder Kunststoffelement gestalteten Isolator ein, der beidseitig zueinander korrespondierend positionierte Führungsstifte aufweist. Dazu sind bevorzugt korrosionsgeschützte, beispielsweise verzinkte Stahlstifte vorgesehen, deren zugehörige endseitige Scheibe stoffschlüssig, beispielsweise durch eine Vulkanisation mit dem Isolator verbunden ist.

Gemäß einem weiteren vorteilhaften Ausführungsbeispiel der vorliegenden Erfindung, wie in Anspruch 6 angegeben, umfasst das Arretierelement einen zylindrisch geformten, aus Gummi oder Kunststoff hergestellten Block als Isolator. Einseitig ist in den Isolator ein radial gestufter, an einem Raumelement befestigter Halter formschlüssig eingepresst, der den Isolator zentriert. Gegenseitig erfolgt eine Isolatorbefestigung über einen Führungsstift, der in Verbindung mit einer Scheibe stoffschlüssig mit dem Stutzen verbunden ist.

Gemäß einem weiteren Ausführungsbeispiel der vorliegenden Erfindung, wie in Anspruch 7 angegeben, weist jedes Raumelement zur Bildung des Arretierelementes zwei zueinander beabstandete Halter auf. Übereinstimmend weist jeder Halter einen endseitig rechtwinklig abgekanteten Schenkel auf, die gemäß dem ersten Raumelement zueinander und gemäß dem zweiten Raumelement entgegengesetzt ausgerichtet sind. In der Einbaulage sind die begrenzt überlappten Schenkel über als Scheibe ausgebildete Isolatoren elastisch verbunden.

Gemäß einem weiteren Ausführungsbeispiel der vorliegenden Erfindung, wie in Anspruch 8 angegeben, weist das Arretierelement einen geometrisch als Ring ausgebildeten, stehend angeordneten Isolator auf. Der Ring kann vorteilhaft so dimensioniert werden, dass dieser in Z-Richtung relativ weich ist, um eine ungehinderte Relativbewegung ausüben zu können, verbunden mit einer optimalen akustischen Entkoppelung. Zur Befestigung sind bevorzugt zwei gegenüberliegend als Schrauben gestaltete Stifte dem Isolator zugeordnet, deren als Scheiben ausgebildete Schraubenköpfe sich an einer Innenkontur des Ringelementes abstützen und mittels einer gegenseitig an der Außenwandung des Isolators angeordneten Schraubenmutter verspannt werden. Zur Erzielung einer dauerhaften Befestigung sind die Verschraubungen korrosionsbehandelt, beispielsweise cadmiert, phosphorisiert oder verzinkt.

Gemäß einem weiteren vorteilhaften Ausführungsbeispiel der vorliegenden Erfindung, wie in Anspruch 9 angegeben, ist für das Arrretierelement ein Aufbau vorgesehen, bei dem wechselweise Metallscheiben mit Rundgummiringen als Isolatoren zu einem mehrschichtigen Dämpfungspaket zusammengefasst sind. Diese Sandwichbauweise ermöglicht eine Relativbewegung in Y-Richtung, dagegen eine hohe Steifigkeit gegenüber einer Relativbewegung in X- und Y-Richtung. Zur Befestigung sind die endseitigen Metallscheiben mit den Raumelementen verbunden.

Gemäß einem weiteren vorteilhaften Ausführungsbeispiel der vorliegenden Erfindung, wie in Anspruch 10 angegeben, weist das Arretierelement einen Bügel auf, in dem ein Isolator als Gummi- oder Kunststoffelement formschlüssig gehalten ist. Ein in dem Isolator eingesetzter Haltestift oder Stutzen weist endseitig eine Kopfscheibe auf, die sich radial einen Öffnungsbereich des Bügels überdeckend erstreckt. Der Aufbau und die Anordnung dieses Arretierelementes eignet sich bevorzugt zur Realisierung einer Relativbewegung zwischen den Raumelementen in Z-Richtung.

Gemäß einem weiteren vorteilhaften Ausführungsbeispiel der vorliegenden Erfindung, wie in Anspruch 11 angegeben, weist das Arretierelement einen an dem ersten Raumelement befestigten Bügel auf, der als Isolator eine elastische Ringwulst umfasst. Dieser Isolator wird von einer topfartigen Aufnahme umschlossen, welche dem zweiten Raumelement zugeordnet ist. Zur sicheren Befestigung ist der Isolator stoffschlüssig an den Bauteilen Bügel und Aufnahme beispielsweise verklebt oder vulkanisiert.

Gemäß einem weiteren Ausführungsbeispiel der vorliegenden Erfindung, wie in Anspruch 12 angeben, umfasst das Arretierelement ein bevorzugt aus Stahl hergestelltes Gehäuse, das einem ersten Raumelement zugeordnet ist. Der in dem weiteren Raumelement positionierte Metallstift ist durch eine Bodenöffnung in das Gehäuse geführt. Mittels einer das Metallstiftende und den Gehäuseboden verbindenden Feder bewirkt das Arretierelement eine akustische Entkopplung und ermöglicht eine Relativbewegung in Z-Richtung.

Gemäß einem weiteren vorteilhaften Ausführungsbeispiel der vorliegenden Erfindung, wie in Anspruch 13 angegeben, ist eine Verkleidung oder Ummantelung vorgesehen, die eine wirksame Abdeckung der Arretierelemente bewirkt. Durch eine bevorzugt als Deckenverkleidung ausgeführte Ummantelung der Arretierelemente wird insbesondere eine Relativbewegung in Z-Richtung zwischen den Raumelementen nicht sichtbar.

### Kurze Beschreibung der Figuren

Im folgenden werden mit Hinweis auf die beigefügten Figuren vorteilhafte Ausführungsbeispiele der vorliegenden Erfindung beschrieben.
Die Figur 1 zeigt in einer Seitenansicht einen Rumpf eines Flugzeugs und verdeutlicht die Lage der Raumelemente (Overhead Compartment, Stairhouse).
Figur 2 zeigt eine Schnittansicht entlang der Linie A A' in Figur 1.
Figur 3 zeigt eine schematische Darstellung der Raumelemente (Crew-Rest Compartment, Stairhouse), einschließlich elastischer Arretierelemente und Fügestellen.
Figur 4 zeigt ein erstes Ausführungsbeispiel eines Arretierelementes, das als Träger einen Hartgewebeklotz einschließt.
Figur 5 zeigt in einer Draufsicht den Hartgewebeklotz gemäß Figur 4.
Figur 6 zeigt ein scheibenartig ausgeführtes Arretierelement, das über zwei gegenüberliegend angeordnete Haltestifte fixiert ist.
Figur 7 zeigt ein Arretierelement, bestehend aus einem zylindrisch geformten Stutzen als Isolator, in dem einseitig ein axial vorstehender, radial gestufter Halter und gegenseitig eine Metallscheibe eingebracht sind.
Figur 8 zeigt ein Arretierelement, bei dem elastische Isolatoren zwischen paarweise angeordneten, abgewinkelten Schenkeln von Haltern eingesetzt sind, die unterschiedlichen Bauteilen der Raumelemente zugeordnet sind.
Figur 9 zeigt als Arretierelement einen als Ring gestalteten, stehend angeordneten Isolator.
Figur 10 zeigt ein Arretierelement, das mehrschichtig aufgebaut Metallscheiben und Rundgummiringe als Isolatoren einschließt.
Figur 11 zeigt als Arretierelement einen in einem Halter eingebrachten Isolator, der zur Aufnahme eines Haltestiftes dient.
Figur 12 zeigt ein Arretierelement, bei dem als Isolator eine elastische Ringwulst zwischen einem Bügel und einer topfartigen Aufnahme eingesetzt ist.
Figur 13 zeigt ein Arretierelement, bestehend aus einem Metallgehäuse mit integrierter Feder, die einerseits an einem Boden des Gehäuses und andererseits an einem freien Ende eines im Gehäuse geführten Haltestiftes befestigt ist.

### Detaillierte Beschreibung der Zeichnungen

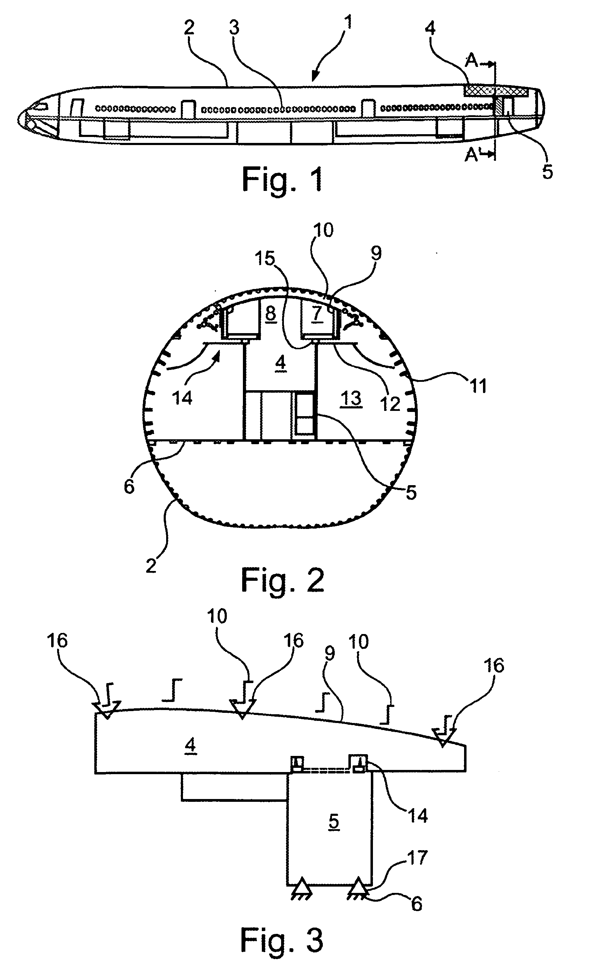

In der folgenden Beschreibung der Figuren 1 bis 13 sind für übereinstimmende oder sich entsprechende Bauteile und Elemente zumindest teilweise gleiche Bezugsziffern verwendet. Weiterhin wird für die Ruhe- und Schlafzone des Service- oder Bedienungspersonals (Overhead Compartment, Crew Rest und Crew Rest Compartment) und für die Treppenbaugruppe (Stairhouse) der einheitliche Begriff Raumelement verwendet.

Figur 1 zeigt in einer Seitenansicht einen Rumpf 2 eines Flugzeugs 1, bei dem im Heck oberhalb eines Sitzbereichs von Passagieren, verdeutlicht durch eine Fensterreihe 3, eine als Raumelement 4 bezeichnete Ruhe- und Schlafzone (Overhead Compartment, Crew Rest und Crew Rest Compartment) vorgesehen ist, die über eine ebenfalls als Raumelement 5 bezeichnete Treppenbaugruppe (Stairhouse) erreichbar ist.

Figur 2 zeigt eine Schnittansicht durch den Rumpf 2 entlang der Schnittlinie A A' in Figur 1. Das Raumelement 5, die Treppenbaugruppe, verbindet eine auch als Kabinenboden bezeichnete Fußbodenstruktur 6 mit dem Raumelement 4, der Ruheund Schlafzone, die in einem oberen Bereich 8 gegenüberliegende Schlafkojen 7 (Bunks) aufweist. Das Raumelement 4 wird rumpfseitig von einer kreissehnenartig gestalteten Mantelfläche 9 umschlossen, die über in Figur 3 abgebildeten Fügestellen 16 an Spanten 10 und / oder an Stringern 11 des Rumpfs 2 befestigt ist. Die Treppenbaugruppe, das Raumelement 5, ist im Bereich einer Decke 12 eines Passagierraums 13 über elastische Arretierelemente 14 mit dem Raumelement 4 akustisch entkoppelt verbunden. Eine Verkleidung 15 verdeckt dabei die Arretierelemente 14 und verhindert eine sichtbare Relativbewegung zwischen den Raumelementen 4 und 5.

Figur 3 zeigt in einer vereinfachten Darstellung die Raumelemente 4, 5. Das Raumelement 4 ist im Bereich der Mantelfläche 9 über Fügestellen 16 innenseitig des Rumpfs 2 an umlaufenden Spanten 16 weitgehend starr jedoch körperschallisoliert befestigt. Das Raumelement 5 ist über Fügestellen 17 mit der Fußbodenstruktur 6 verbunden. Die Fügestellen 16, 17 bewirken eine Fixierung der Raumelemente 4, 5 in X-, Y- und Z-Richtung. Die eine akustische Entkoppelung bewirkenden Arretierelemente 14 ermöglichen gleichzeitig eine Relativbewegung in Z-Richtung zwischen den Raumelementen 4, 5.

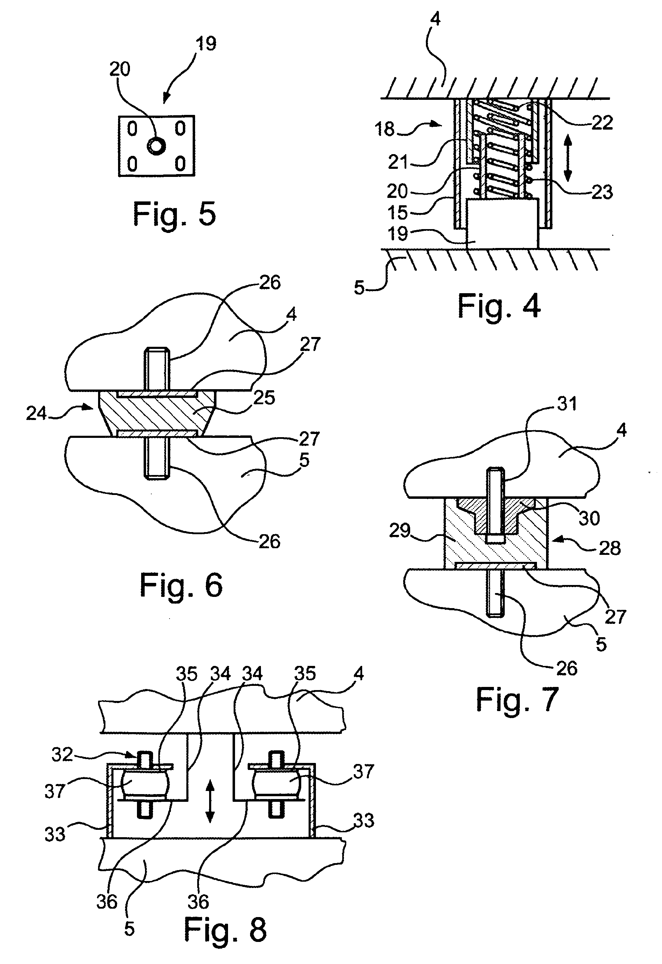

Figur 4 zeigt den Aufbau des Arretierelementes 18 in einer Schnittansicht. Als Träger 19 ist bevorzugt ein Hartgewebeklotz vorgesehen, in dem ein Metallrohr 20 senkrecht positioniert ist und der radial beabstandet von einer Buchse 21 bereichsweise umschlossen ist. Zwischen dem Träger 19 und dem Raumelement 4 sind zwei Federn 22, 23 eingesetzt, wobei die Feder 22 in dem Metallrohr 20 geführt ist und die Feder 23 das Metallrohr 20 außen umschließt. Eine sichtbare Relativbewegung des Arretierelementes 18, verdeutlicht durch den Doppelpfeil, verhindert eine an dem Raumelement 4 befestigte, das Arretierelement 18 außenseitig umschließende Verkleidung 15.

Figur 5 zeigt den als Hartgewebeklotz ausgebildeten Träger 19 in einer Ansicht, in dem das Metallrohr 20 zentrisch positioniert ist. Die Befestigung des Trägers 19 erfolgt durch Verschraubungen, die in vier Langlöchern eingesetzt sind.

Figur 6 zeigt den Aufbau des Arretierelementes 24, das zur akustischen Entkoppelung einen scheibenartigen Isolator 25 umfasst, der bei auftretenden Druckspannungen zwischen den Raumelementen 4, 5 elastisch verformbar ist. Zur
Fixierung des Isolators 25 sind als Führungsstift 26 vorzugsweise Gewindebolzen vorgesehen, die mittels einer Metallscheibe 27 stoffschlüssig, beispielsweise vulkanisiert mit dem Isolator 25 verbunden sind.

Figur 7 zeigt eine Schnittansicht des Arretierelementes 28, das einen gummielastischen Block 29 umfasst, der vergleichbar Figur 6 über einen Führungsstift 26 in Verbindung mit der Metallscheibe 27 an dem Raumelement 5 fixiert ist. An der Gegenseite ist in dem Block 29 ein radial gestufter, axial vorstehender Halter 30 eingesetzt, welcher über einen Führungsstift 31 fixiert ist.

Figur 8 zeigt den Aufbau des Arretierelementes 32, das zwei zueinander beabstandete, dem Raumelement 5 zugeordnete Halter 33 umfasst, die zur Aufnahme von Haltern 34 des Raumelementes 4 bestimmt sind. Die paarweise zueinander angeordneten Halter 33, 34 bilden jeweils rechtwinkelig zueinander verlaufende Winkel 35, 36, die über parallel angeordnete Isolatoren 37 verbunden sind.

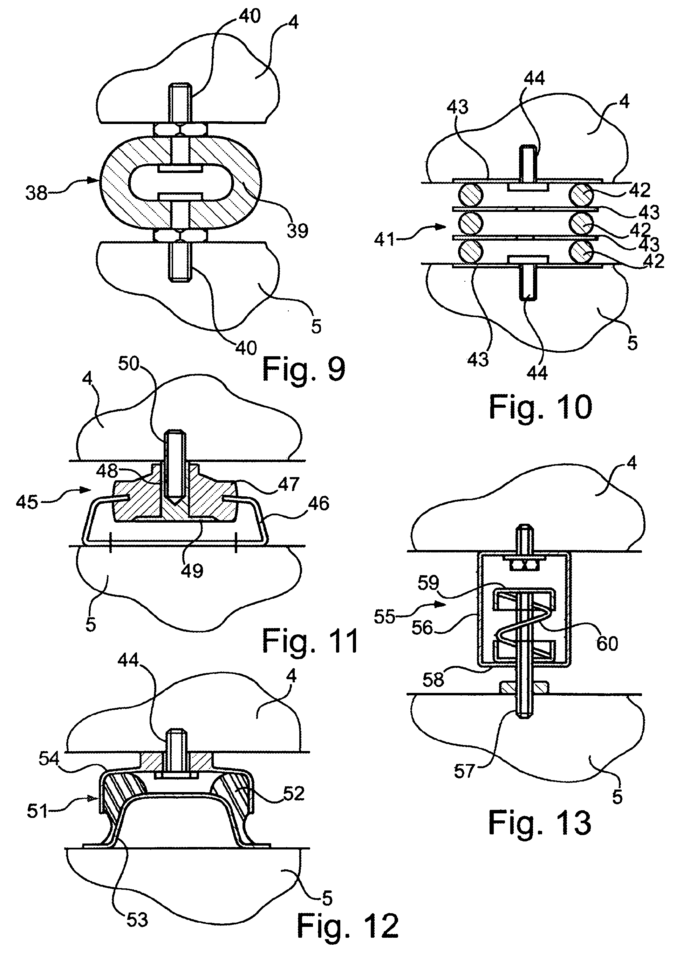

Figur 9 zeigt das Arretierelement 38, das einen stehend ringförmig angeordneten Isolator 39 umfasst. Über zwei Verschraubungen 40 ist der Isolator 39 zur akustischen Entkopplung mit den Raumelementen 4, 5 verbunden.

Figur 10 zeigt das Arretierelement 41, das drei geschichtet angeordnete, ringförmige Isolatoren 42 umfasst, die zwischen den Metallscheiben 43 abgeordnet sind. Über Verschraubungen 44 sind sowohl die untere als auch die obere Metallscheibe 43 mit den Raumelementen 4, 5 verbunden.

Figur 11 zeigt das Arretierelement 45, das einen lösbar an dem Raumelement 5 befestigten Bügel 46 zur Aufnahme eines Isolators 47 enthält. Ein in dem Isolator 47 eingesetzter Stutzen 48 überdeckt mittels einer bügelseitig großflächigen Scheibe 49 eine Stirnseite des Isolators 47. An der scheibenfernen Seite bildet der Stutzen 48 eine Aufnahme für einen Gewindebolzen 50, der in das Raumelement 4 eingeschraubt ist.

Figur 12 zeigt das Arretierelement 51 mit einem eine elastische Ringwand bildenden Isolator 52, der einen als Armierung bildenden Träger 53 umschließt. Der Isolator 52 ist in einer topfartigen, ebenfalls aus Metall hergestellten Aufnahme 54 eingesetzt. Zur stoffschlüssigen Verbindung ist der Isolator 52 beispielsweise mit dem Träger 53 und der Aufnahme 54 vulkanisiert. Mittels einer Verschraubung 44 sowie nicht näher dargestellten Befestigungsarten ist das Arretierelement 51 mit den Raumelementen 4, 5 verbunden.

Figur 13 zeigt das Arretierelement 55, das ein an dem Raumelement 4 verschraubtes Gehäuse 56 umfasst, in das ein dem Raumelement 5 zugeordneter Metallstift 57 eingreift. Zwischen einem Boden 58 des Gehäuses 56 und einem Metallstiftende 59 ist eine Feder 60 angeordnet, die Relativbewegungen zwischen den Raumelementen 4, 5 wirksam akustisch entkoppelt.

Alternativ zu den Beschreibungen der Figuren 4, 7, 8, 11, 12 und 13 kann die akustische Entkopplung auch durch eine umgekehrte Einbaulage der Arretierelemente 18, 28, 32, 45, 51, 55 erreicht.

Ergänzend ist darauf hinzuweisen, dass "umfassend" keine anderen Elemente oder Schritte aussschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszahlenliste

- 1: Flugzeug
- 2: Rumpf
- 3: Fensterreihe
- 4: Raumelement
- 5: Raumelement
- 6: Fußbodenstruktur
- 7: Schlafkoje
- 8: Bereich
- 9: Mantelfläche
- 10: Spante
- 11: Stringer
- 12: Decke
- 13: Passagierraum
- 14: Arretierelement
- 15: Verkleidung
- 16: Fügestelle
- 17: Fügestelle
- 18: Arretierelement
- 19: Träger
- 20: Metallrohr
- 21: Buchse
- 22: Feder
- 23: Feder
- 24: Arretierelement
- 25: Isolator
- 26: Führungsstift
- 27: Metallscheibe
- 28: Arretierelement
- 29: Block
- 30: Halter
- 31: Führungsstift
- 32: Arretierelement
- 33: Halter
- 34: Halter
- 35: Schenkel
- 36: Schenkel
- 37: Isolator
- 38: Arretierelement
- 39: Isolator
- 40: Verschraubung
- 41: Arretierelement
- 42: Isolator
- 43: Metallscheibe
- 44: Verschraubung
- 45: Arretierelement
- 46: Bügel
- 47: Isolator
- 48: Stutzen
- 49: Scheibe
- 50: Gewindebolzen
- 51: Arretierelement
- 52: Isolator
- 53: Träger
- 54: Aufnahme
- 55: Arretierelement
- 56: Gehäuse
- 57: Metallstift
- 58: Boden
- 59: Metallstiftende
- 60: Feder

## Patentansprüche

1. Flugzeug, umfassend einen Rumpf (2) mit zumindest einer im Abstand oberhalb eines Sitzbereichs für Passagiere angeordneten, als erstes Raumelement (4) bezeichneten Ruhe- und Schlafzone für das Service- oder Bedienungspersonal, die mittels eines als Treppenbaugruppe ausgeführten zweiten Raumelementes (5) von einer Fußbodenstruktur (6) erreichbar ist, wobei die einzelnen Raumelemente (4, 5) über Fügestellen (16, 17) mittelbar oder unmittelbar an einem Rumpf (2) oder der Fußbodenstruktur (6) des Flugzeugs (1) fixiert sind, **dadurch gekennzeichnet, dass** über elastische Arretierelemente (14, 18, 24, 28, 32, 38, 41, 45, 51, 55) das zweite Raumelement (5) von dem ersten Raumelement (4) akustisch entkoppelt ist.

2. Flugzeug nach Anspruch 1, **dadurch gekennzeichnet, dass** das elastische Arretierelement (14, 18, 24, 28, 32, 38, 41, 45, 51, 55) Relativbewegungen des zweiten Raumelementes (5) in Z-Richtung ermöglicht und Relativbewegungen in X- und Y-Richtung weitestgehend unterbindet.

3. Flugzeug nach Anspruch 1, **dadurch gekennzeichnet, dass** das Arretierelement (14, 18, 24, 28, 32, 38, 41, 45, 51, 55) einen Relativbewegungen bzw. Schwingungen absorbierenden Volumenkörper, insbesondere ein aus Kautschuk oder Naturgummi hergestelltes Gummielement, ein vorzugsweise aus Neoprene hergestelltes Kunststoffelement, ein Federelement oder ein aus einem anderen funktional äquivalenten Material hergestelltes Element einschließt, das mit den Raumelementen (4, 5) verbunden ist.

4. Flugzeug nach einem der Ansprüche 1 bis 3, **dadurch gekennzeichnet, dass** das Arretierelement (18) einen dem zweiten Raumelement (5) zugeordneten Hartgewebeklotz mit einem senkrecht eingesetzten Metallrohr (20) oder Führungsstift umfasst, das bzw. der in eine Aufnahme des ersten Raumelementes (4) eingreift und zumindest mit einer von einer Buchse (21) umschlossenen Feder (22, 23) zusammenwirkt.

5. Flugzeug nach einem der Ansprüche 1 bis 3, **dadurch gekennzeichnet, dass** als Arretierelement (24) ein scheibenartiger Isolator (25) als Gummi- oder Kunststoffelement vorgesehen ist, dem beidseitig zueinander korrespondierend positionierte Führungsstifte (26) zugeordnet sind, die jeweils über eine zugehörige Metallscheibe (27) stoffschlüssig mit dem Isolator (25) verbunden sind und die in Aufnahmebohrungen der Raumelemente (4, 5) eingepasst sind.

6. Flugzeug nach einem der Ansprüche 1 bis 3, **dadurch gekennzeichnet, dass** das Arretierelement (28) einen axial vorstehenden, radial gestuften Halter (30) umfasst, der formschlüssig in einen zylindrisch geformten Block (29) als Isolator eingepasst ist und der Block (29) über Führungsstifte (26, 31) in den Raumelementen (4, 5) fixiert ist.

7. Flugzeug nach einem der Ansprüche 1 bis 3, **dadurch gekennzeichnet, dass** zur Bildung des Arretierelements (32) jedes Raumelement (4, 5) zwei beabstandete Halter (33; 34) umfasst, die endseitig rechtwinkelig abgekantete, paarweise zueinander oder voneinander gerichtete Schenkel (35; 36) bilden, wobei in einer Einbaulage paarweise begrenzt überlappte Schenkel (35; 36) beider Raumelemente (4, 5) zumindest über einen als Scheibe ausgebildeten Isolator (37) elastisch verbunden sind.

8. Flugzeug nach einem der Ansprüche 1 bis 3, **dadurch gekennzeichnet, dass** das Arretierelement (38) einen als Ring ausgebildeten, stehend eingesetzten Isolator (39) umfasst, wobei mittels gegenüberliegenden Verschraubungen (40) das Arretierelement (38) fixiert ist.

9. Flugzeug nach einem der Ansprüche 1 bis 3, **dadurch gekennzeichnet, dass** zur Bildung des Arretierelementes (41) wechselweise Metallscheiben (43) mit Isolatoren (42) in Form von Rundgummiringen zu einem mehrschichtigen Dämpfungspaket zusammengefasst sind, wobei jeweils endseitige Metallscheiben (43) über Verschraubungen (44) an den Raumelementen (4, 5) befestigt sind.

10. Flugzeug nach einem der Ansprüche 1 bis 3, **dadurch gekennzeichnet, dass** das Arretierelement (45) einen Bügel (46) einschließt, in dem ein Isolator (47) formschlüssig gehalten ist, welcher einen Stutzen (48) mit zugehöriger Scheibe (49) aufnimmt, die großflächig und dabei eine Öffnung des Bügels (46) überdeckend an dem Isolator (47) abgestützt ist.

11. Flugzeug nach einem der Ansprüche 1 bis 3, **dadurch gekennzeichnet, dass** das Arretierelement (51) einen Träger (53) mit einem als Ringwulst ausgebildeten Isolator (52) umfasst, der von einer topfartig gestalteten Aufnahme (54) umschlossen ist.

12. Flugzeug nach einem der Ansprüche 1 bis 3, **dadurch gekennzeichnet, dass** das Arretierelement (55) ein einem ersten Raumelement (4) zugeordnetes Gehäuse (56) einschließt, in das ein Metallstift (57) des zweiten Raumelementes (5) eingreift, wobei eine innerhalb des Gehäuses (56) integrierte Feder (60) ein Metallstiftende (59) mit einem Gehäuseboden (58) verbindet.

13. Flugzeug nach Anspruch 1, **dadurch gekennzeichnet, dass** zur Abdeckung der Arretierelemente (14, 18, 24, 28, 32, 38, 41, 45, 51, 55) einem Raumelement (4, 5) eine Verkleidung (15) zugeordnet ist.

## Claims

1. An aircraft comprising a fuselage (2), with at least one resting and sleeping zone for the service or operating personnel, the resting and sleeping zone being provided at a certain distance above a seating area for the passengers, which resting and sleeping zone is referred to as a first room element (4) and which can be reached from a floor structure (6) via a second room element (5) referred to as a stair assembly, wherein the individual room elements (4, 5) are directly or indirectly fixed on a fuselage (2) or the floor structure (6) of the aircraft (1) via joints (16, 17), **characterized in that** the second room element (5) is acoustically decoupled from the first room element (4) via elastic locking elements (14, 18, 24, 28, 32, 38, 41, 45, 51, 55).

2. The aircraft of claim 1, **characterized in that** the elastic locking element (14, 18, 24, 28, 32, 38, 41, 45, 51, 55) allows relative movements of the second room element (5) in Z-direction and largely prevents relative movements in X- and Y-directions.

3. The aircraft of claim 1, **characterized in that** the locking element (14, 18, 24, 28, 32, 38, 41, 45, 51, 55) incorporates a body that absorbs relative movements and vibrations respectively, particularly a rubber element made of caoutchouc or natural rubber, a plastic element that is preferably made of neoprene, a spring element or an element made of another functionally equivalent material, which is connected to the room elements (4, 5).

4. The aircraft of one of claims 1 to 3, **characterized in that** the locking element (18) comprises a laminated fabric block with vertically inserted metal tube (20) or guide pin, wherein the block is assigned to the second room element (5), which metal tube or guide pin engages into a receptacle of the first room element (4) and cooperates at least with a spring (22, 23) enclosed by a bushing (21).

5. The aircraft of one of claims 1 to 3, **characterized in that** as locking element (24) a disk-like insulator (25) in the form of a rubber or plastic element is comprised, to which element correspondingly positioned guide pins (26) are assigned on both sides, with said guide pins respectively being integrally connected to the insulator (25) by means of a corresponding metal disk (27) and fitted into receptacle bores of the room elements (4, 5).

6. The aircraft of one of claims 1 to 3, **characterized in that** the locking element (28) comprises an axially protruding, radially stepped holder (30) that is fitted into a cylindrically shaped block (29) as an insulator in a form-fitted fashion, and wherein the block (29) is fixed in the room elements (4, 5) via guide pins (26, 31).

7. The aircraft of one of claims 1 to 3, **characterized in that** each room element (4, 5) comprises two holders (33; 34) that are spaced apart from one another in order to form the locking element (32), with said holders being bent at a right angle on their end and forming limbs (35; 36) that are directed toward one another or apart from one another in pairs, and with limbs (35; 36) of both room elements (4, 5) that in mounting position in pairs overlap to a limited degree being elastically connected via at least one insulator (37) realized in the form of a disk.

8. The aircraft of one of claims 1 to 3, **characterized in that** the locking element (38) comprises an insulator (39) that is realized in the form of a ring and inserted upright, with the locking element (38) being fixed by means of opposite screw connections (40).

9. The aircraft of one of claims 1 to 3, **characterized in that** metal disks (43) and insulators (42) in the form of a round rubber rings are alternately combined into a multilayer damping assembly in order to form the locking element (41), with respective metal disks (43) arranged on the ends being mounted to the room elements (4, 5) via screw connections (44).

10. The aircraft of one of claims 1 to 3, **characterized in that** the locking element (45) incorporates a bracket (46), in which an insulator (47) is held in a form-fitted fashion, with said insulator accommodating a connecting piece (48) with a corresponding disk (49) that is supported on the insulator (47) on a large surface such that it covers an opening of the bracket (46).

11. The aircraft of one of claims 1 to 3, **characterized in that** the locking element (51) comprises a support (53) with an insulator (52) that is realized in the form of an annular bead and enclosed by a pot-like receptacle (54).

12. The aircraft of one of claims 1 to 3, wherein the locking element (55) incorporates a housing (56) that is assigned to a first room element (4) and into which housing a metal pin (57) of the second room element (5) engages, wherein a spring (60) integrated into the housing (56) connects an end (59) of the metal pin to a housing bottom (58).

13. The aircraft of claim 1, **characterized in that** a lining (15) is assigned to a room element (4, 5) in order to cover the locking elements (14, 18, 24, 28, 32, 38, 41, 45, 51, 55).

## Revendications

1. Avion, comprenant un fuselage (2) avec au moins une zone de repos et de sommeil, qualifiée de premier élément de compartiment (4), pour le personnel de service ou les opérateurs, disposée à distance au-dessus d'une zone de sièges pour passagers et qui peut être atteinte, à partir d'une structure de plancher (6), au moyen d'un second élément de compartiment (5) réalisé sous forme d'ensemble d'escalier, les éléments de compartiments individuels (4, 5) étant fixés directement ou indirectement, par l'intermédiaire d'emplacements de joints (16, 17), sur un fuselage (2) ou sur la structure de plancher (6) de l'avion (1), **caractérisé en ce que** le second élément de compartiment (5) est découplé acoustiquement du premier élément de compartiment (4) par l'intermédiaire d'éléments d'arrêt élastiques (14, 18, 24, 28, 32, 38, 41, 45, 51, 55).

2. Avion selon la revendication 1, **caractérisé en ce que** l'élément d'arrêt élastique (14, 18, 24, 28, 32, 38, 41, 45, 51, 55) permet des mouvements relatifs du second élément de compartiment (5) dans la direction Z et en empêche de larges mouvements relatifs dans les directions X et Y.

3. Avion selon la revendication 1, **caractérisé en ce que** l'élément d'arrêt (14, 18, 24, 28, 32, 38, 41, 45, 51, 55) renferme un corps de volume absorbant les mouvements relatifs et/ou les vibrations, en particulier un élément fabriqué en caoutchouc ou en caoutchouc naturel, un élément en matière plastique fabriqué de préférence en Néoprène, un élément à ressort ou un élément fabriqué en un autre matériau fonctionnel équivalent, qui est assemblé avec les éléments de compartiments (4, 5).

4. Avion selon l'une des revendications 1 à 3, **caractérisé en ce que** l'élément d'arrêt (18) comprend un bloc en stratifié-tissu, associé au second compartiment (5), avec un tube métallique (20) ou doigt de guidage monté verticalement, qui s'engage dans un logement du premier élément de compartiment (4) et coopère au moins avec un ressort (22, 23) entouré par une douille (21).

5. Avion selon l'une des revendications 1 à 3, **caractérisé en ce qu'**un isolateur (25) en forme de disque, sous forme d'élément en caoutchouc ou en matière plastique, est prévu en tant qu'élément d'arrêt (24), isolateur auquel sont associés des doigts de guidage (26) positionnés bilatéralement en correspondance l'un de l'autre, qui sont assemblés chacun par alliance de matière avec l'isolateur (25), par l'intermédiaire d'un disque métallique correspondant (27), et s'adaptent dans des trous de réception des éléments de compartiments (4, 5).

6. Avion selon l'une des revendications 1 à 3, **caractérisé en ce que** l'élément d'arrêt (28) comprend un support (30) en saillie axiale, étagé dans la direction radiale, qui s'adapte par coopération de forme dans un bloc (29) formé en cylindre en tant qu'isolateur, et le bloc (29) est fixé dans les éléments de compartiments (4, 5) par l'inter-médiaire de doigts de guidage (26, 31).

7. Avion selon l'une des revendications 1 à 3, **caractérisé en ce que**, pour former l'élément d'arrêt (32), chaque élément de compartiment (4, 5) comprend deux supports (33 ; 34) distants l'un de l'autre, qui forment du côté extrême des branches (35 ; 36) pliées en angle droit, orientées par paires l'une vers l'autre ou à l'écart l'une de l'autre, des branches (35 ; 36), en chevauchement limité par paires dans une position de montage, des deux éléments de compartiments (4, 5) étant assemblées élastiquement au moins par l'intermédiaire d'un isolateur (37) réalisé sous forme de disque.

8. Avion selon l'une des revendications 1 à 3, **caractérisé en ce que** l'élément d'arrêt (38) comprend un isolateur (39) réalisé sous forme d'anneau, monté verticalement, l'élément d'arrêt (38) étant fixé au moyen de vissages (40) en vis-à-vis.

9. Avion selon l'une des revendications 1 à 3, **caractérisé en ce que**, pour former l'élément d'arrêt (41), des disques métalliques (43) sont regroupés alternativement avec des isolateurs (42) en forme de bagues en caoutchouc rondes en un paquet amortisseur multicouche, des disques métalliques (43) du côté extrême étant respectivement fixés aux éléments de compartiments (4, 5) par l'intermédiaire de vissages (44).

10. Avion selon l'une des revendications 1 à 3, **caractérisé en ce que** l'élément d'arrêt (45) renferme un étrier (46), dans lequel est maintenu par coopération de forme un isolateur (47), qui reçoit une tubulure (48) avec un disque correspondant (49), lequel s'appuie sur une grande surface sur l'isolateur (47) en recouvrant alors une ouverture de l'étrier (46).

11. Avion selon l'une des revendications 1 à 3, **caractérisé en ce que** l'élément d'arrêt (51) comprend un support (53) avec un isolateur (52) réalisé sous forme de bourrelet annulaire, lequel isolateur est entouré par un logement (54) configuré en pot.

12. Avion selon l'une des revendications 1 à 3, **caractérisé en ce que** l'élément d'arrêt (55) renferme un carter (56) associé au premier élément de compartiment (4), carter dans lequel s'engage une broche métallique (57) du second élément de compartiment (5), un ressort (60), intégré dans le carter (56), reliant une extrémité (59) de la broche métallique au fond de carter (58).

13. Avion selon la revendication 1, **caractérisé en ce qu'**un revêtement (15) est associé à un élément de compartiment (4, 5) pour le recouvrement des éléments d'arrêt (14, 18, 24, 28, 32, 38, 41, 45, 51, 55).
